**Europäisches Patentamt**

**European Patent Office**

**Office européen des brevets**

(19)

(11) Numéro de publication : **0 594 483 A1**

# (12) DEMANDE DE BREVET EUROPEEN

(21) Numéro de dépôt : **93402541.2**

(22) Date de dépôt : **15.10.93**

(51) Int. Cl.⁵ : **G01K 15/00**, G01D 3/02, G01D 18/00

(30) Priorité : **19.10.92 FR 9212477**

(43) Date de publication de la demande :
**27.04.94 Bulletin 94/17**

(84) Etats contractants désignés :
**CH DE ES FR GB IT LI NL**

(71) Demandeur : **LANDIS & GYR BUILDING CONTROL (FRANCE) Sarl**
**16 boulevard du Général Leclerc**
**F-92115 Clichy (FR)**

(72) Inventeur : **Gilbert, Jérôme**
**40, rue Chaptal**
**F92300 Levallois-Perret (FR)**

(74) Mandataire : **Pontet, Bernard**
**Pontet & Allano s.a.r.l. 25, rue Jean Rostand**
**Parc-Club Orsay-Université**
**F-91893 Orsay Cédex (FR)**

(54) **Procédé et dispositif pour mesurer une grandeur physique d'exploitation, notamment la température dans un local ou un véhicule.**

(57) Une unité fonctionnelle (1), par exemple un convecteur électrique, comporte un dispositif de mesure de température (9) permettant de réguler son fonctionnement.

Le dispositif (9) comporte un montage électrique, dont le composant sensible à la température est une thermistance (19). Le micro-contrôleur (29) fait passer le transistor (27) de l'état saturé à l'état bloqué, et compte le temps nécessaire à la charge du condensateur (23) à travers la thermistance. La fin de charge est détectée par une bascule de Schmitt (21) qui stoppe le comptage du temps par le micro-contrôleur. Le temps de charge est lié à la température agissant sur la thermistance, par un facteur de proportionnalité, qu'on détermine à l'origine en remplaçant la thermistance par une résistance étalon. On s'affranchit ainsi des incertitudes sur les caractéristiques des composants du montage.

Utilisation notamment dans des unités fonctionnelles équipées d'origine d'un micro-contrôleur pour communiquer avec un réseau domotique.

FIG.1

La présente invention concerne un procédé pour mesurer une grandeur physique d'exploitation, par exemple la température dans un local d'habitation ou de travail, ou dans un véhicule.

La présente invention concerne également un dispositif pour la mise en oeuvre de ce procédé et une unité fonctionnelle incorporant ce dispositif.

Dans les dispositifs comportant une régulation thermique, tels que les dispositifs de chauffage ou de climatisation d'un local ou d'un véhicule, il est nécessaire de mesurer la température avec une précision suffisante. On connaît différents moyens de mesure, relativement précis mais assez coûteux. On connaît également les montages à thermistance dans lesquels on évalue la température d'après le temps de charge d'un condensateur à travers la thermistance. Ces montages à thermistance sont cependant entachés d'une erreur systématique, résultant du cumul des incertitudes affectant les caractéristiques des différents composants.

Le but de l'invention est de proposer un procédé et un dispositif associé du genre indiqué au début, qui permettent de mesurer de manière à la fois précise et économique une grandeur physique d'exploitation, par exemple la température dans une unité impliquant une régulation de température.

Suivant le premier aspect de l'invention, le procédé pour mesurer une grandeur physique d'exploitation est caractérisé par les étapes suivantes:

- test sur au moins une valeur d'une variable de fonctionnement d'un montage électrique dont un composant est sensible à la grandeur physique qui sera à mesurer, le test étant effectué alors que ce montage électrique est soumis à au moins une condition particulière prédéterminée ;
- détermination d'au moins une donnée d'étalonnage d'après ce test ;
- enregistrement de la donnée d'étalonnage dans une mémoire non volatile ;
- mesure de la variable de fonctionnement lorsque le composant est soumis aux variations de la grandeur physique d'exploitation ;
- conversion des mesures de la variable de fonctionnement en évaluations de la grandeur physique d'exploitation, d'après la donnée d'étalonnage enregistrée dans la mémoire non volatile.

Suivant le deuxième aspect de l'invention, le dispositif de mesure d'une grandeur physique d'exploitation pour la mise en oeuvre du procédé comprend les éléments suivants :

- un montage électrique, comprenant un composant susceptible de changer d'état de façon continue et monotone au moins sur une certaine plage de variation, en fonction de cette grandeur physique d'exploitation, à laquelle il est soumis ;
- une mémoire non volatile d'enregistrement d'au moins une donnée d'étalonnage ;
- un micro-contrôleur programmé pour capter des mesures d'une variable de fonctionnement liée au montage et les convertir en évaluations de la grandeur physique, à l'aide de la donnée d'étalonnage.

Suivant le troisième aspect de l'invention, l'unité fonctionnelle comprend un micro-contrôleur, des moyens d'entrée/sortie et le dispositif de mesure défini ci-dessus.

L'une des idées qui sous-tend l'invention est que les unités fonctionnelles de régulation, notamment régulation de température, sont en général déjà équipées d'un micro-contrôleur pour d'autres raisons, par exemple pour remplir la fonction de régulation ou pour que cette unité puisse dialoguer avec un réseau domotique. Une mémoire non volatile est en principe associée au micro-contrôleur pour stocker les adresses des appareils avec lesquels il doit pouvoir dialoguer. Dans ce cas, l'invention exploite la présence du micro-contrôleur, et de la mémoire non volatile qui lui est associée. Ceci constitue une économie de moyens et réduit d'autant le coût du dispositif suivant le deuxième aspect de l'invention.

Ainsi, selon l'invention, on stocke en outre dans la mémoire non volatile au moins une donnée d'étalonnage du montage, ce qui permet au montage d'être précis dans chaque réalisation même s'il s'agit d'un montage très peu coûteux fondamentalement entaché d'une forte incertitude.

L'invention s'intéresse particulièrement à un procédé pour mesurer une grandeur physique d'exploitation, comprenant les étapes suivantes :

- dans au moins une condition particulière prédéterminée, étalonnage d'un montage électrique comprenant un composant sensible à la grandeur physique à mesurer ; et
- compte-tenu du résultat de l'étalonnage, conversion d'une mesure d'une variable de fonctionnement du montage électrique en évaluation de la grandeur physique lorsque le composant sensible est soumis à ladite grandeur physique,

et dans lequel, lors de l'étalonnage, on calcule d'après la valeur de la variable de fonctionnement lorsque le montage est dans la condition particulière prédéterminée un coefficient constant que l'on fait intervenir dans au moins toute une plage d'application d'une loi utilisée pour ladite étape de conversion.

On évite ainsi d'avoir à effectuer autant d'opérations d'étalonnage qu'il y a, par exemple, de valeurs dans un tableau de correspondance entre la variable et la grandeur physique.

Cette loi peut être une table théorique préétablie donnant l'évaluation de la grandeur physique en fonction de la variable de fonctionnement, ou une loi mathématique permettant de calculer la grandeur physique d'après

EP 0 594 483 A1

la variable de fonctionnement. Il peut encore s'agir d'une loi mathématique ou une table donnant une mesure de l'état du composant en fonction de la variable de fonctionnement, un deuxième stade de conversion donnant ensuite, par exemple d'après les indications du fabricant du composant, l'évaluation de la grandeur physique d'après l'état du composant.

L'invention s'intéresse aussi tout particulièrement à un procédé pour mesurer une grandeur physique d'exploitation, comprenant les étapes suivantes :

- dans au moins une condition particulière prédéterminée, étalonnage d'un montage électrique comprenant un composant sensible à la grandeur physique à mesurer ; et
- compte-tenu du résultat de l'étalonnage conversion d'une mesure d'une variable de fonctionnement du montage électrique en évaluation de la grandeur physique, lorsque le composant sensible est soumis à ladite grandeur physique,

et dans lequel, lors de l'étalonnage, on mesure la variable de fonctionnement alors que le composant sensible est remplacé par un composant étalon équivalent au composant sensible pour une valeur prédéterminée de la grandeur physique.

Ainsi, l'opération d'étalonnage est simplifiée car elle ne nécessite pas de faire exister une ou plusieurs valeurs de la grandeur physique.

D'autres particularités et avantages de l'invention ressortiront encore de la description ci-après, relative à des exemples non limitatifs.

Aux dessins annexés :

- la figure 1 est une vue d'une partie d'une installation incluant des unités fonctionnelles selon l'invention ;
- la figure 2 est un schéma détaillé du montage électrique ;
- la figure 3 est un organigramme du procédé selon l'invention ; et
- la figure 4 est un schéma simplifié d'une variante.

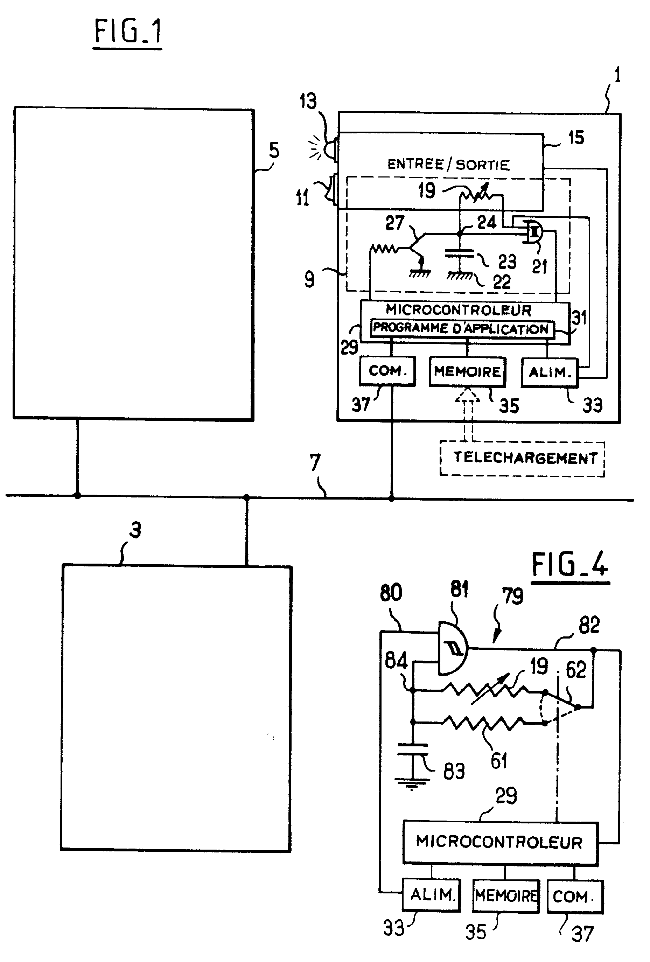

Dans l'exemple présenté à la figure 1, l'installation, volontairement simplifiée, comprend diverses unités fonctionnelles 1, 3 et 5, parmi lesquelles se trouve un convecteur de chauffage 1, en tant qu'exemple d'unité nécessitant la mesure d'une grandeur physique et plus particulièrement d'une température pour son fonctionnement. Les unités fonctionnelles 1, 3 et 5 sont reliées les unes aux autres par un espace de communication bidirectionnel 7, à travers lequel elles peuvent échanger des messages d'état provenant des unités 1, 3 et 5, et des messages de commande destinés aux unités 1, 3 et 5. Ces messages peuvent être échangés par exemple avec des appareils de commande tels que des dispositifs de consigne de température, programmateurs horaires, etc..., également reliés à l'espace 7 mais non représentés.

L'espace 7 peut être constitué par le réseau d'alimentation électrique, auquel cas les messages sont élaborés de manière concrète selon la technique des courants porteurs. L'espace 7 peut également être constitué par un espace perméable aux ondes radio ou aux signaux infra-rouges, ou encore par des moyens filaires.

Le convecteur électrique 1 comporte un micro-contrôleur 29 relié à des moyens d'entrée/sortie 15 qui font l'interface avec l'utilisateur. En pratique, les moyens d'entrée/sortie sont constitués par les éventuels boutons de commande 11 et voyants lumineux 13 du convecteur électrique, ainsi que par les résistances électriques produisant l'effet de chauffage, non représentées. Le micro-contrôleur 29 est en outre relié à une alimentation 33, à une mémoire non volatile 35, ainsi qu'à l'espace de communication 7 par l'intermédiaire d'un moyen de transmission bidirectionnel 37, par exemple un modem capable de transformer en messages du type courants porteurs les informations provenant du micro-contrôleur 29 et destinées à l'espace 7, et inversement de transformer en signaux acceptables par le micro-contrôleur 29 les messages du type courants porteurs provenant de l'espace 7. Un programme d'application 31 implanté dans le micro-contrôleur 29 est chargé de gérer le fonctionnement du convecteur 1, notamment la mise en marche et l'arrêt de la résistance chauffante, et l'état du voyant lumineux 13 en prenant en compte l'état du bouton de commande 11, les messages reçus en provenance de l'espace 7 ainsi que les mesures de température effectuées grâce à un dispositif de mesure de température 9.

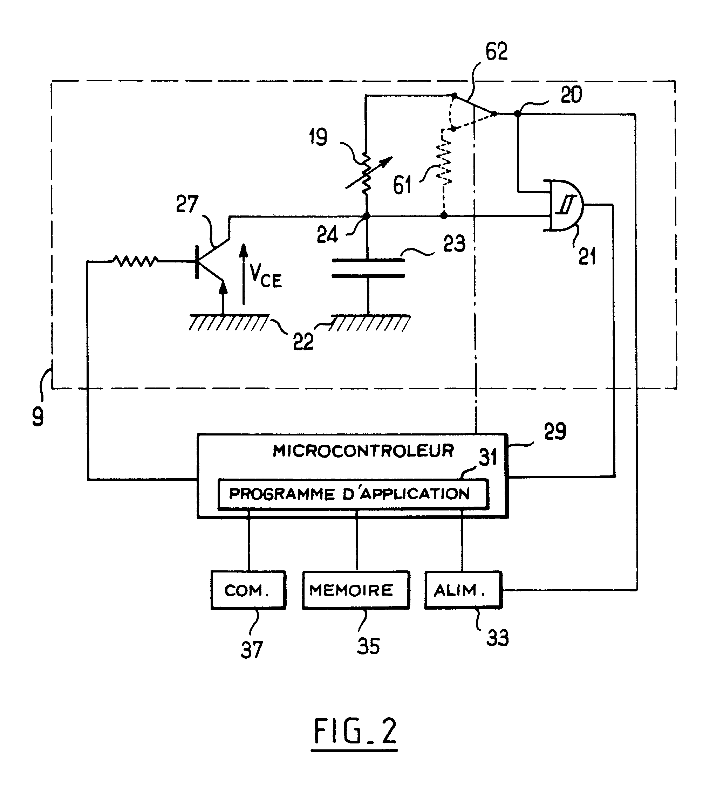

Le dispositif 9 (voir aussi figure 2) comporte un montage électrique constitué d'un condensateur 23, monté en parallèle avec la ligne collecteur-émetteur d'un transistor de commande 27, entre la masse 22 et une borne 24 d'une thermistance 19. L'autre borne 20 de la thermistance 19 est à un potentiel défini par l'alimentation 33. La base du transistor de commande 27 est reliée à une sortie du micro-contrôleur 29. La thermistance 19 est exposée à une température caractéristique du fonctionnement du convecteur. Lorsqu'une mesure de cette température est nécessaire, le micro-contrôleur fait passer le transistor de l'état saturé à l'état bloqué, et compte le temps s'écoulant entre ce passage et l'instant où le point commun 24 entre le condensateur 23 et la thermistance 19 atteint un potentiel déterminé, ce qui est détecté par une bascule de Schmitt 21 ayant une entrée reliée au dit point commun, une autre entrée reliée à la borne 20, et une sortie reliée à une entrée du micro-contrôleur 29.

La valeur ohmique de la thermistance 19 varie en fonction de la température suivant une loi monotone connue qui peut se formuler par une table de correspondance. La mémoire non volatile 35 n'ayant pas une capacité suffisante pour contenir un grand nombre de points, on introduit dans cette mémoire une table ayant des points (valeur ohmique Rp, température Tp) très rapprochés les uns des autres dans la zone où l'on a besoin de précision (par exemple autour de 20°C pour un convecteur et autour de moins 18°C pour un congélateur), et des points beaucoup plus espacés dans les autres zones.

La valeur ohmique R de la thermistance 19 du montage électrique s'exprime en fonction du temps de charge t du condensateur 23 par la loi monotone suivante

$$R = Kt$$

dans laquelle K est une constante théorique caractéristique du montage, donnée par la formule suivante :

$$K = -1 / [C.\ln (1 - (Vtrig - V_{CE})/(Vcc - V_{CE}))],$$

avec:

$V_{CE}$ : tension collecteur-émetteur entre le point commun 24 et la masse 22 lorsque le transistor 27 est saturé ;

Vcc : tension entre la sortie 20 de l'alimentation 33 et la masse 22 ;

Vtrig : tension de seuil de basculement de la bascule de Schmitt 21 ;

C : capacité du condensateur 23.

La constante théorique K est entachée d'une erreur résultant du cumul des incertitudes sur les caractéristiques de chaque composant du montage condensateur 23, transistor 27, et bascule de Schmitt 21.

Pour étalonner le montage, il suffit selon l'invention de déterminer la valeur réelle de la constante K, ou encore le coefficient de correction à appliquer à la valeur théorique de la constante K.

Pour cela, on mesure le temps de charge to du condensateur 23 à travers une résistance étalon 61 à valeur ohmique fixe, par exemple Ro = 100 kiloohms, correspondant à la valeur ohmique de la thermistance 19 à 25°C, et montée en lieu et place de cette thermistance.

Pour cela, un commutateur 62 met en service la résistance étalon 61 entre les points de jonction 20 et 24, et déconnecte entre ceux-ci la thermistance 19.

Connaissant d'une part la valeur réelle to du temps de charge avec la résistance étalon 61 et d'autre part la valeur théorique to' de ce temps de charge, on en déduit un coefficient correcteur Q :

$$Q = to/to'$$

On obtient alors pour toute valeur réelle du temps de charge t la valeur ohmique réelle R de la thermistance par la formule :

$$R = Q.K.t$$

Cet étalonnage peut être effectué de manière très simple. A la fin de la fabrication du circuit électrique, celui-ci est testé par une "planche à clous", c'est à dire un dispositif qui se branche provisoirement sur le montage pour effectuer simultanément toute une série de vérifications. Au cours de cette opération, un test peut être rajouté pour mesurer le temps de charge avec la résistance étalon 61. Celle-ci peut faire partie de la "planche à clous", c'est la raison pour laquelle elle (61) n'est représentée qu'en pointillés à la figure 2. On peut ensuite télécharger dans la mémoire volatile le coefficient correcteur Q selon les techniques connues.

Mais la résistance étalon 61 peut également faire partie du montage électrique 9. Il peut alors être prévu que l'étalonnage a lieu non pas à la fabrication mais lors de la mise en service de l'unité fonctionnelle dans le cadre des étapes d'initialisation.

Le microcontrôleur 29 commande alors le commutateur 62 pour mettre en service la résistance étalon 61 et déconnecter la thermistance 19, puis commande la séquence de mesure de to et en déduit le coefficient Q. Dans ce cas, la logique d'étalonnage, au lieu d'appartenir à un ordinateur de la chaîne de fabrication, fait partie de la programmation du micro-contrôleur 29.

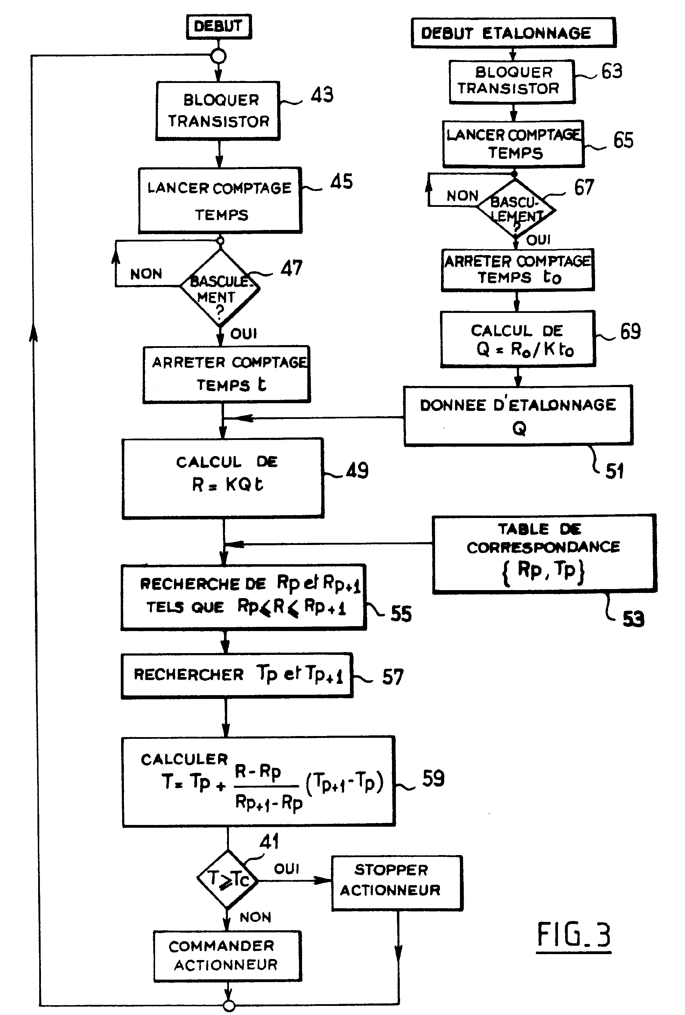

On va maintenant décrire le procédé selon l'invention en référence à la figure 3, qui représente l'organigramme de la partie du programme d'application 31 qui est concernée par l'invention. Au début, le programme comprend une étape 43 par laquelle on bloque le transistor de commande 27. Le comptage du temps 45 est alors lancé, jusqu'à ce que le seuil de basculement de la bascule de Schmitt 21 soit atteint. Dès que le test 47 détecte ce basculement, le comptage du temps est stoppé. Le programme calcule alors (étape 49) la valeur ohmique R de la thermistance en fonction de la donnée d'étalonnage Q du montage 9, désignée par la référence 51. L'étape 55 consiste à rechercher dans la table de correspondance 53 les valeurs ohmiques $R_P$ et $R_{P+1}$ correspondant à des points de la table et encadrant la valeur R calculée. En 57, on identifie les valeurs de température corespondantes $T_P$ et $T_{P+1}$, pour calculer par interpolation linéaire (étape 59) la valeur T de la température correspondant au temps mesuré t. Cette valeur T est ensuite comparée à une valeur de consigne Tc. Si le test 41 est positif, l'ordre est donné de stopper l'actionneur de l'unité fonctionnelle. Dans le cas contraire, l'unité fonctionnelle est activée. Ensuite le programme d'acquisition de température est relancé.

On réalise ainsi avec un étalonnage très simple une mesure de température précise. On pourra certes objecter que la valeur ohmique de la thermistance peut elle-même présenter une certaine incertitude par rapport à la table de correspondance théorique. Mais cette incertitude est acceptable car c'est la seule restante. Autrement dit, on peut considérer que l'une des idées qui sous-tend l'invention est d'éliminer l'incertitude portant sur les constantes, et de considérer que les incertitudes restantes, portant sur les variables, sont alors acceptables.

Le processus décrit en référence à la figure 3, est précédé des étapes d'étalonnage 63, 65, 67, 69 qui ressemblent à la succession 43 à 49 excepté que l'étape 69 permet de calculer "Q" à partir de la valeur connue Ro de la résistance étalon, et non pas de calculer comme à l'étape 49 la variable de fonctionnement R à partir de Q connu.

Dans l'exemple représenté à la figure 4, le montage électrique est un circuit oscillateur et la variable de fonctionnement n'est plus le temps de charge d'un condensateur, mais la fréquence du circuit oscillateur 79. Le circuit comprend une bascule de Schmitt 81 (ou "porte NON ET à hystérésis") ayant une entrée de commande 80 reliée à l'alimentation 33, une autre entrée 84 reliée à la masse par l'intermédiaire d'un condensateur 83, et une sortie 82 reliée au micro-contrôleur 29. La sortie 82 est en outre reliée à l'autre entrée 84 de la bascule 81 par l'intermédiaire de la thermistance 19 ou, lors de l'étalonnage, de la résistance étalon 61. Lorsque l'entrée de commande est soumise à un potentiel continu convenable, la sortie 82 fournit une tension en créneaux.

Selon que la sortie 82 est à son niveau haut ou bas, le condensateur se charge ou respectivement se décharge à travers la thermistance. La tension en créneaux a une fréquence F = 1/K'RC, relation dans laquelle F est la fréquence, K' une constante typiquement voisine de 1,2 ; R est la valeur ohmique entre les bornes 82 et 84 ; et C la capacité du condensateur 83.

Le micro-contrôleur 29 peut donc calculer R = 1/K'C F.

L'étape d'étalonnage au moyen de la résistance étalon 61 permet au micro-contrôleur d'appliquer en fait à cette formule un coefficient correcteur, la formule devenant ainsi R = 1/QK'CF.

Cette correction systématique suppose que la bascule 81 et le condensateur C sont peu sensible à la grandeur physique à mesurer, ce qui est vrai en pratique.

Connaissant la valeur de R, le micro-contrôleur détermine la grandeur physique (température) d'après la loi de correspondance relative à la thermistance 19 utilisée.

Bien entendu, la présente invention n'est pas limitée à l'exemple décrit et représenté.

On peut par exemple appliquer le même procédé à des mesures de débit, de pression ou de déformation, la thermistance étant alors remplacée par la résistance du capteur de mesure des paramètres physiques.

Dans le cas d'une mesure de débit, la résistance serait celle du fil chaud placé dans l'écoulement à mesurer. Pour la mesure de pression ou de déformation,la résistance serait celle de la jauge de déformation.

Plutôt que de rentrer en mémoire le paramètre Q, on pourrait rentrer le produit K.Q. On pourrait encore, à l'étape telle que 49, calculer une valeur ohmique fictive d'après la formule théorique R = Kt, puis se référer à une table de correspondance qui soit, dans chaque dispositif, modifiée pour tenir compte du résultat du test avec la résistance-étalon. Une telle modification consisterait à remplacer pour chaque température $T_P$ de la table, la valeur $R_P$ théorique par une valeur corrigée égale à $R_P/Q$. On peut encore rentrer directement dans la mémoire la table de correspondance entre le temps de charge t ou la fréquence F et la température T. En fonction du résultat du test, un facteur de proportionnalité 1/Q est appliqué à toutes les valeurs de temps de charge correspondant aux points de températures Tp listés dans la table.

Dans certains types de montages, il est possible que la formule théorique à corriger comporte plusieurs constantes, et soit par exemple de la forme Y = AX + B ou Y = AX$^2$ + BX + C avec A, B et C étant des constantes. Dans ce cas, on peut éliminer toutes les incertitudes portant sur les constantes en pratiquant autant de tests d'étalonnage qu'il y a de constantes.

Dans l'exemple de la figure 4, on peut placer sur l'entrée de commande 80 de la bascule 81 un interrupteur permettant au micro-contrôleur de sélectionner un parmi n oscillateurs tels que 79 sensibles à la variation d'une grandeur physique, qui se partagent la même entrée de traitement sur le micro-contrôleur.

On peut bien sûr utiliser tout autre montage oscillateur pour assurer la fonction sans sortir du cadre de l'invention.

Dans tous les exemples, on peut utiliser, au lieu d'un composant sensible ayant un unique élément, dont l'état (par exemple la valeur ohmique) suit une loi de variation non-linéaire en fonction de la grandeur physique à mesurer, un composant à éléments multiples donnant globalement une réponse quasi linéaire dans la plage de mesure utile.

**Revendications**

1. Procédé pour mesurer une grandeur physique d'exploitation, caractérisé par les étapes suivantes :

- test sur au moins une valeur (to) d'une variable de fonctionnement (t) d'un montage électrique (9) dont un composant (19) est sensible à la grandeur physique qui sera à mesurer, le test étant effectué alors que ce montage électrique est soumis à au moins une condition particulière prédéterminée ;
- détermination d'au moins une donnée d'étalonnage (Q) d'après ce test ;
- enregistrement de la donnée d'étalonnage dans une mémoire non-volatile (35)
- mesure de la variable de fonctionnement (t, F) lorsque le composant (19) est soumis aux variations de la grandeur physique d'exploitation (T)
- conversion des mesures de la variable de fonctionnement (t, F) en évaluations de la grandeur physique d'exploitation (T), d'après la donnée d'étalonnage enregistrée dans la mémoire non volatile (35).

2. Procédé selon la revendication 1, caractérisé en ce que l'étape de conversion met en jeu une relation mathématique théorique comportant au moins une constante (K), en ce que l'étape de test consiste à déterminer expérimentalement, au moins indirectement, l'erreur sur cette constante, et en ce que la donnée d'étalonnage est prise en compte pour corriger systématiquement l'erreur sur la constante pendant l'étape de conversion.

3. Procédé selon la revendication 2, caractérisé en ce que la relation mathématique théorique donne une valeur représentative (R) de l'état du composant sensible (19) en fonction de la variable de fonctionnement (t, F)

4. Procédé selon la revendication 2 ou 3, caractérisé en ce que pour la détermination de l'"au moins une" donnée d'étalonnage, on néglige les erreurs portant sur les variables.

5. Procédé selon l'une des revendications 1 à 4, caractérisé en ce que l'étape de conversion comprend l'utilisation d'une table de correspondance, et en ce que l'étape d'enregistrement consiste à introduire dans la mémoire non-volatile ladite table de correspondance calculée en appliquant à une table théorique au moins un coefficient de correction (Q ; 1/Q) obtenu d'après le résultat du test.

6. Procédé selon l'une des revendications 1 à 4, caractérisé en ce que l'étape de conversion comprend de manière successive ou combinée :
- déterminer l'état (R) du composant (19) d'après la valeur de la variable de fonctionnement (t, F) et d'après la donnée d'étalonnage (Q) ;
- déterminer la grandeur physique (T) d'après l'état (R) du composant (19), en utilisant une loi de correspondance (53).

7. Procédé selon la revendication 1, caractérisé en ce qu'on déduit du test sur la valeur (to) de la variable de fonctionnement une donnée d'étalonnage consistant en un coefficient (Q ; 1/Q) à appliquer à une loi de correspondace que l'on met en oeuvre lors de la conversion et qui donne l'état du composant (19) d'après la variable de fonctionnement (t, F).

8. Procédé selon l'une des revendications 1 à 7, caractérisé en ce qu'on utilise un montage (9) tel que la variable de fonctionnement (t) du montage est théoriquement proportionnelle à une valeur représentative (R) de l'état du composant.

9. Procédé selon l'une des revendications 1 à 8, caractérisé en ce que pour le test, on remplace le composant (19) sensible aux variations de la grandeur physique d'exploitation (T) par un composant étalon (61) équivalant au composant sensible pour une valeur déterminée de la grandeur physique.

10. Procédé selon l'une des revendications 1 à 9, caractérisé en ce que la grandeur physique d'exploitation mesurée est la température.

11. Procédé selon l'une des revendications 1 à 10, caractérisé en ce que la variable de fonctionnement est le temps de charge (t) d'un condensateur (23), qui se charge à travers une thermistance (19) constituant le composant sensible à la grandeur physique.

12. Procédé selon l'une des revendications 1 à 11, caractérisé en ce que le montage est un oscillateur (79) incluant le composant sensible (19) et la variable de fonctionnement est la fréquence (F) de fonctionnement de l'oscillateur.

13. Procédé selon l'une des revendications 1 à 12, caractérisé en ce que la conversion fait intervenir une table de correspondance avec des points plus rapprochés dans une plage de variation de la grandeur physique (T) correspondant à l'utilisation la plus fréquente.

14. Dispositif de mesure d'une grandeur physique d'exploitation pour la mise en oeuvre du procédé selon l'une des revendications 1 à 13 ; caractérisé en ce qu'il comprend :
    - un montage électrique (9, 79), comprenant un composant (19) susceptible de changer d'état de façon continue et monotone au moins sur une certaine plage de variation, en fonction de cette grandeur physique (T) d'exploitation, à laquelle il est soumis ;
    - une mémoire non volatile (35) d'enregistrement d'au moins une donnée d'étalonnage (Q) ;
    - un micro-contrôleur (29) programmé pour capter des mesures d'une variable de fonctionnement (t, F) liée au montage (9, 79) et les convertir en évaluations de la grandeur physique (T), à l'aide de la donnée d'étalonnage (Q).

15. Dispositif selon la revendication 14 pour la mesure d'une température, caractérisé en ce que l'élément susceptible de changer d'état est une thermistance (19) à travers laquelle se charge un condensateur (23, 83).

16. Dispositif selon la revendication 14 ou 15, caractérisé en ce que le montage (9, 79) est tel que la variable de fonctionnement (t, F) est liée à une valeur représentative (R) de l'état du composant (19) par une relation théorique ne faisant intervenir qu'au moins une constante (K, K'C).

17. Dispositif selon la revendication 16, caractérisé en ce que la relation est une relation de proportionnalité.

18. Dispositif selon l'une des revendications 14 à 17, caractérisé en ce qu'il comporte un composant étalon (61) et en ce que le micro-contrôleur (19) est programmé pour mettre en service le composant étalon (61) à la place du composant sensible (19) mesurer la variable de fonctionnement, et en déduire la donnée d'étalonnage (Q).

19. Unité fonctionnelle (1) comprenant un micro-contrôleur (29), des moyens d'entrée/sortie (15) et un dispositif de mesure selon l'une des revendications 14 à 18.

20. Unité fonctionnelle (1) intervenant dans un processus thermique, comprenant un micro-contrôleur (29) pour assurer au moins en partie la commande du processus thermique, des moyens d'entrée/sortie à action thermique (15), et un dispositif de mesure de température (9) selon l'une des revendications 14 à 18, dans lequel le composant sensible (19) est exposé à une température intervenant dans le processus thermique.

21. Unité fonctionnelle (1) selon la revendication 19 ou 20, caractérisée en ce qu'elle comprend des moyens (37) pour relier le micro-contrôleur (29) à un espace de communication (7).

# FIG.1

ENTREE / SORTIE

MICROCONTROLEUR

PROGRAMME D'APPLICATION

COM.

MEMOIRE

ALIM.

TELECHARGEMENT

# FIG.4

MICROCONTROLEUR

ALIM.

MEMOIRE

COM.

$$\underline{\mathsf{FIG}\_2}$$

FIG.3

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | WO-A-86 03831 (ROBERT BOSCH GMBH)<br><br>* page 4, ligne 22 - page 7, ligne 19 *<br>* page 9, alinéa 2; figures 1,2 * | 1-6,8, 10,14, 19,20 | G01K15/00<br>G01D3/02<br>G01D18/00 |
| Y | | 11-13, 15-18 | |
| A | | 7,9 | |
| | --- | | |
| X | PATENT ABSTRACTS OF JAPAN<br>vol. 8, no. 144 (P-284)(1581) 5 Juillet 1984<br>& JP-A-59 042 422 (TOKYO SHIBAURA DENKI KK)<br>* abrégé * | 1,6,8, 10,14, 15,19 | |
| Y | | 16,17 | |
| A | | 2-5,7,9, 11,13,20 | |
| | --- | | |
| Y | US-A-4 504 922 (R.A. JOHNSON ET AL)<br>* colonne 2, ligne 8 - colonne 4, ligne 4; figures 1-3 * | 11,13,15 | **DOMAINES TECHNIQUES RECHERCHES (Int.Cl.5)** |
| A | | 1,5,6,8, 10,14, 19,20 | G01K<br>G01D |
| | --- | | |
| Y | PATENT ABSTRACTS OF JAPAN<br>vol. 10, no. 327 (P-513)7 Novembre 1986<br>& JP-A-61 133 829 (SHIOJIRI KOGYO KK) 21 Juin 1986<br>* abrégé * | 12,18 | |
| A | | 1-11, 13-17, 19-21 | |
| | ----- | | |

Le présent rapport a été établi pour toutes les revendications

| Lieu de la recherche | Date d'achèvement de la recherche | Examinateur |
|---|---|---|
| LA HAYE | 17 Janvier 1994 | CHAPPLE, I |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)